(19) Europäisches Patentamt
European Patent Office
Office européen des brevets

(11) Veröffentlichungsnummer: **0 297 353**
**A2**

(12) # EUROPÄISCHE PATENTANMELDUNG

(21) Anmeldenummer: **88109526.9**

(22) Anmeldetag: **15.06.88**

(51) Int. Cl.4: **C08L 69/00 , C08L 67/00 , //(C08L69/00,67:00,27:12, 51:00),(C08L67/00,69:00,27:12, 51:00)**

(30) Priorität: **27.06.87 DE 3721239**

(43) Veröffentlichungstag der Anmeldung: **04.01.89 Patentblatt 89/01**

(84) Benannte Vertragsstaaten: **DE FR GB IT**

(71) Anmelder: **BAYER AG**

**D-5090 Leverkusen(DE)**

(72) Erfinder: **Genz, Joachim, Dr.**
**Bodelschwinghstrasse 16**
**D-4150 Krefeld(DE)**
Erfinder: **Dicke, Hans-Rudolf, Dr.**
**Bodelschwinghstrasse 16**
**D-4150 Krefeld(DE)**
Erfinder: **Grigo, Ulrich, Dr.**
**Michelsheide 9**
**D-4152 Kempen 3(DE)**
Erfinder: **Nouvertné, Werner, Dr.**
**Scheiblerstrasse 95**
**D-4150 Krefeld(DE)**

(54) **Formmassen aus Polycarbonat, thermotropem Polymer, Pfropfpolymerisat und fluoriertem Polyolefin.**

(57) Formkörper aus Mischungen von aromatischem Polycarbonat und thermotropem Polymer zeigen eine verminderte Neigung zum Delaminieren, wenn sie fluoriertes Polyolefin und kautschukelastisches Pfropfpolymerisat enthalten.

EP 0 297 353 A2

# Formmassen aus Polycarbonat, thermotropem Polymer, Pfropfpolymerisat und fluoriertem Polyolefin

Die Erfindung betrifft thermoplastische Formmassen aus aromatischem Polycarbonat, thermotropem Polymer, kautschukelastischem Pfropfpolymerisat und fluoriertem Polyolefin, ein Verfahren zur Herstellung dieser Formmassen und ihre Verwendung zur Herstellung von Formkörpern (vornehmlich durch Spritzguß), von Filamenten, Fasern und Folien.

Mischungen aus aromatischem Polycarbonat und thermotropem Polymer sind bekannt (EP-A 33 175, GB-PS 15 38 632). Obwohl diese Mischungen zahlreiche wünschenswerte Eigenschaften besitzen, zeigen sie auch Nachteile: So neigen beispielsweise daraus hergestellte Formkörper zum Delaminieren. Diese Neigung tritt insbesondere dann zutage, wenn Formkörper wie z.B. Platten durch Schneiden, Sägen, Stanzen o.ä. geteilt werden; eine erhöhte Neigung zum Delaminieren beobachtet man besonders dann, wenn auf die Trennfläche (Schnittfläche) Kräfte wirken: Diese können dann zu einer unerwünschten Spaltung des Formkörpers führen.

Gegenstand der Erfindung sind also thermoplastische Formmassen aus

A. 1 bis 98,87, vorzugsweise 50 bis 94,4, insbesondere 80 bis 94,4, Gew.-% aromatischem Polycarbonat,

B. 1 bis 86, vorzugsweise 5 bis 44,4, insbesondere 5 bis 19,4, Gew.-% thermotropem Polymer,

C: 0,05 bis 5, vorzugsweise 0,1 bis 1, Gew.-% fluoriertem Polyolefin und

D: 0,08 bis 9, vorzugsweise 0,5 bis 5, Gew.-% kautschukelastischem Pfropfpolymerisat, wobei sich die Prozentangaben jeweils auf die Summe der Komponenten A bis D beziehen.

## Aromatische Polycarbonate A

Bevorzugte aromatische Polycarbonate A sind Homo- und Copolycarbonate, denen mindestens ein Diphenol der Formeln (I) bis (III) zugrundeliegt:

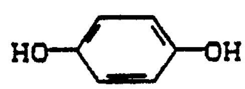

(I)

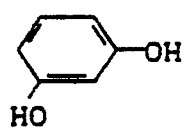

(II)

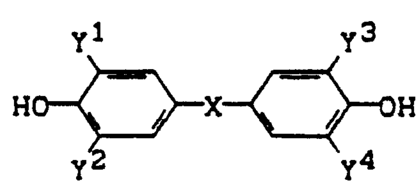

(III)

worin

X eine Einfachbindung,

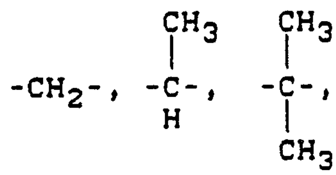

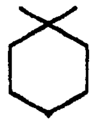, -O-, -S-, $-SO_2-$ oder 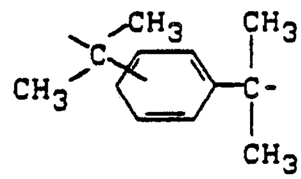

und

$Y^1$ bis $Y^4$ unabhängig voneinander Wasserstoff, $C_1$-$C_4$-Alkyl, vorzugsweise Methyl, oder Halogen, vorzugsweise Chlor oder Brom, bedeuten.

Diese und weitere geeignete Diphenole sind z.B. in den US-PS 3 028 365, 3 275 601, 3 148 172, 3 062 781, 2 991 273, 3 271 367, 2 999 835, 2 970 131 und 2 999 846, in den DE-OS 1 570 703, 2 063 050, 2 063 052, 2 211 956, 2 211 957, der FR-PS 1 561 518 und in der Monographie von H. Schnell, "Chemistry and Physics of Polycarbonates", Interscience Publishers, New York, 1964, beschrieben.

Bevorzugte Diphenole sind beispielsweise
2,2-Bis-(4-hydroxyphenyl)-propan,
1,1-Bis-(4-hydroxyphenyl)-cyclohexan,
2,2-Bis-(3,5-dichlor-4-hydroxyphenyl)-propan,
2,2-Bis-(3,5-dimethyl-4-hydroxyphenyl)-propan,
1,1-Bis-(3,5-dimethyl-4-hydroxyphenyl)-ethan,
Bis-(3,5-dimethyl-4-hydroxyphenyl)-methan und
Bis-(4-hydroxyphenyl)-sulfid.

Die aromatischen Polycarbonate A können durch den Einbau geringer Mengen, vorzugsweise von 0,05 bis 2,0 Mol-% (bezogen auf eingesetzte Diphenole), drei- oder mehr als dreifunktioneller Verbindungen verzweigt sein.

Bevorzugte Verzweigungsmittel für die Polycarbonate A sind mindestens trifunktionelle Verbindungen, wie sie z.B. in den DE-OS 15 70 533 und 15 95 762 sowie in der US-PS 3 544 514 beschrieben sind, nämlich vorzugsweise dreiwertige Phenole, aromatische Tricarbonsäuren oder ihre reaktionsfähigen Derivate und Hydroxycarbonsäuren mit mindestens drei funktionellen Gruppen. Beispiele bevorzugter Verzweigungsmittel sind
2,4-Bis-(4-hydroxyphenyl-isopropyl)-phenol,
2,6-Bis-(2′-hydroxy-5′-methylbenzyl)-4-methylphenol,
2-(4-Hydroxyphenyl)-2-(2,4-dihydroxyphenyl)-propan,
1,4-Bis-(4,4′-dihydroxytriphenyl-methyl)benzol,
2.4-Dihydroxybenzoesäure, Trimesinsäure, Cyanurchlorid,
3,3-Bis-(4-hydroxy-phenyl)-2-oxo-2,3-dihydroindol sowie
3,3-Bis-(4-hydroxy-3-methyl-phenyl)-2-oxo-2,3-dihydroindol.

Die aromatischen Polycarbonate A besitzen in der Regel mittlere Molekulargewichte $M_w$ von 10 000 bis 200 000, vorzugsweise von 20 000 bis 80 000, ermittelt durch Lichtstreuung.

Zur Einstellung des Molekulargewichts $M_w$ der Polycarbonate A können in bekannter Weise Kettenabbrecher in den berechneten Mengen eingesetzt werden.

Bevorzugte Endgruppen für die Polycarbonate A sind Reste von Phenol, Benzoesäure, Mono- und Dialkylphenolen und Mono- und Dialkylbenzoesäuren, deren Alkylsubstituenten insgesamt bis zu 20 C-Atomen pro Endgruppe tragen können. Besonders bevorzugte Endgruppen entsprechen der Formel

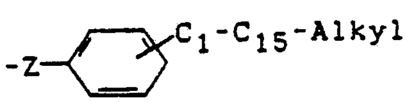

(IV)

worin

Z -O- oder $-\underset{\underset{O}{\|}}{C}-$ bedeutet.

Beispiele bevorzugter Endgruppen sind die Reste von Phenol, p-tert.-Butyl-phenol, p-Isooctyl-phenol, p-n-Nonylphenol, 3,5-Di-tert.-butyl-phenol, 2-(3,5-Dimethylheptyl)-phenol und 3-(3,5-Dimethylheptyl)-phenol.

Anstelle der freien Phenole können deren Halogenkohlensäureester, anstelle der Carbonsäuren ihre Säurechloride eingesetzt werden.

Die Mengen der Endgruppe beträgt vorzugsweise 1 bis 10 Mol-%, bezogen auf die Diphenolreste des Polycarbonats A.

## Thermotrope Polymere B

Als "thermotrop" bezeichnet man solche Substanzen, die flüssigkristalline Schmelzen bilden. Thermotrope Polymere sind hinreichend bekannt, vgl. z.B.

F. E. Mc Farlane et. al., Liquid Crystal Polymers II, Contemporary Topics in Polymer Science, Vol. 2, Plenum Publishing Corporation, 1977;

W. J. Jackson und H. F. Kuhfuss, J. Polymer Science, Polymers Chem. Ed. 14, 2042 (1976);

W. C. Wooten et al. in A. Ciferri "Ultra-high Modulus Polymers", Applied Science Publ., London 1979, S. 362 f.;

A. Blumstein et al., "Liquid Crystalline Order in Polymers", Academic Press 1978;

J. Preston, Angew. Makromol. Chem. 109/110, S. 1-19 (1982);

A. Ciferri, W.R. Krigbaum, R. B. Meyer "Polymer Liquid Crystals", Academic Press, New York, 1982;

EP 1185, 1340, 8855, 11 640, 15 856, 17 310, 18 145, 18 709, 22 344, 44 205, 49 615;

US 3 991 013, 3 991 014, 4 066 620, 4 067 852, 4 083 829, 4 107 143;

WO 79/797, 79/1034, 79/1040.

Der flüssigkristalline Zustand von Polymerschmelzen läßt sich mit Hilfe eines Polarisationsmikroskops untersuchen: Für die Untersuchungen war das Okular mit einem Aufsatz ausgerüstet, der eine Fotodiode im Brennpunkt der Okularlinse angeordnet enthielt. Anhand eines nachgeschalteten Meßverstärkers mit Regeleinrichtung wurde der Meßwert am eingeschalteten Mikroskop bei parallel angeordneten Nicol'schen Prismen in Abwesenheit einer Materialprobe auf 100 Skalenteile eingestellt. Bei gekreuzten Nicol'schen Prismen ergab sich dann ein Wert von 0,01 Skalenteilen.

Die Schichtdicke der untersuchten Polykondensatschmelzen betrug 100 µm.

Die Untersuchung der Polykondensate erfolgte nach dem Aufschmelzen der Proben bei Temperaturen zwischen 280 und 400 °C. Sofern in diesem gesamten Bereich oder in einem Teil davon eine Aufhellung der zwischen den gekreuzten Nicol'schen Prismen beobachteten Schmelze auftrat, wurde das Polykondensat als thermotrop flüssigkristallin eingestuft.

Die flüssigkristallinen Polykondensate zeigen in der Meßanordnung Werte über 1 Skalenteil, meist Werte von 3 - 90 Skalenteilen. Für amorphe Schmelzen, z. B. aromatische Polycarbonate, wurden dagegen Werte von weniger als 0,1 Skalenteil gefunden.

Die oben beschriebene Methode ist für eine Schnellbestimmung im Laboratorium besonders geeignet und liefert in nahezu allen Fällen zweifelsfreie Ergebnisse. In Zweifelsfällen kann es dagegen sinnvoll sein, das Vorhandensein flüssigkristalliner Komponenten mittels Röntgenweitwinkelstreuung in der Schmelze nachzuweisen, wie es z.B. bei G.W. Gray und P.A. Windsor, "Plastic Crystals, Physico-Chemical Properties and Methods of Investigation", insbesondere Chapter 3, John Wiley & Sons, New York, Sydney, Toronto 1974, beschrieben ist.

Zur Herstellung der erfindungsgemäßen Mischungen sind beispielsweise die folgenden thermotropen Polymeren B geeignet:

- Polyester,
- Polythiolester,
- Polyesteramide,
- Polyesterimide,
- Polyazomethine,
- Polyestercarbonate.

Bevorzugte thermotrope Polymere B sind vollaromatische Polyester auf Basis von

a. aromatischen Dicarbonsäuren,

b. Diphenolen und gegebenenfalls

c. aromatischen Hydroxycarbonsäuren, wobei das Molverhältnis von Resten einkondensierter aromatischer Dicarbonsäuren zu Resten einkondensierter Diphenole 0.95 bis 1.05 beträgt und die Reste einkondensierter aromatischer Hydroxycarbonsäuren 0 bis 100 Mol-%, vorzugsweise 30 bis 80 Mol-%, insbesondere 50 bis 70 Mol-%, bezogen auf einkondensierte Reste a) und c), ausmachen.

Aromatische Dicarbonsäuren a) sind alle jene Dicarbonsäuren, deren Carboxylgruppen unmittelbar an einen aromatischen Ring geknüpft sind.

Bevorzugte aromatische Dicarbonsäuren a) entsprechen der Formel

HOOC - A - COOH (V)

worin

A einen bivalenten aromatischen Rest mit 6 bis 24 C-Atomen, vorzugsweise mit 6 bis 16 C-Atomen, bedeutet.

Bevorzugte aromatische Reste A sind solche, bei denen sich die beiden Bindungen zu den Carboxylgruppen koaxial in entgegengesetzte Richtungen erstrecken, wie beispielsweise in 1,4-Phenylen, 1,4-Naphthylen oder 4,4'-Biphenylen, oder bei denen die in entgegengesetzte Richtungen zeigenden Bindungen parallel zueinander verschoben sind, wie beispielsweise in 1,5-Naphthylen, 2,6-Naphthylen oder 3,5'-Biphenylen.

Auch aromatische Reste A, deren beide Bindungen zu den Carboxylgruppen sich nicht koaxial oder parallel verschoben in entgegengesetzte Richtungen erstrecken, sind geeignet, sofern die beiden Bindungen einen Winkel von 45° bis weniger als 180° einschließen und nicht an direkt benachbarten Kohlenstoffatomen sitzen, wie beispielsweise in 1,3-Phenylen, 1,3-, 1,6-, 1,7- oder 2,7-Napthylen oder 3,4'-Biphenylen.

Bevorzugte aromatische Dicarbonsäuren a) sind z.B. 1,4-Naphthalindicarbonsäure, 1,5-Naphthalindicarbonsäure, 12,6-Naphthalindicarbonsäure, 4,4'-Biphenyl-dicarbonsäure, 3,3'-Biphenyl-dicarbonsäure, 4,4'-Diphenoxyethandicarbonsäure, 4,4'-Diphenylether-dicarbonsäure, Methylterephthalsäure, Methoxyterephthalsäure, Chlorterephthalsäure, 4-Chlornaphthalin-2,7-dicarbonsäure, 1,3-Naphthalindicarbonsäure, 1,6-Naphthalindicarbon säure, 1,7-Naphthalindicarbonsäure, 2,7-Naphthalindicarbonsäure, 3,4'-Biphenyl-dicarbonsäure, 3,4'-Diphenylether-dicarbonsäure, 4-Methylisophthalsäure, 4-Methylisophthalsäure, 4,4'-Dichlordiphenylether-3,3'-dicarbonsäure, 4,4'-Benzophenondicarbonsäure und 3,4'-Benzophenondicarbonsäure.

Besonders bevorzugte aromatische Dicarbonsäuren a) sind Iso- und Terephthalsäure.

Bevorzugte Diphenole b) entsprechen der Formel

HO - D - OH (VI)

worin

D einen zweiwertigen ein- oder mehrkernigen aromatischen Rest mit 6 bis 30 C-Atomen bedeutet, wobei D derart gebaut ist, daß die beiden OH-Gruppen direkt an je ein Kohlenstoffatom eines aromatischen Systems gebunden sind und die beiden Bindungen zu den phenolischen Hydroxylgruppen eine Winkel von 45° C bis 180° C bilden. Für die Konstitution des Restes D gilt das gleiche wie für den aromatischen Rest A oben beschrieben worden ist.

Besonders bevorzugte Diphenole b) sind z.B. Hydrochinon, 4,4'-Dihydroxydiphenyl, 4,4'-Dihydroxydiphenylether, 4,4'-Dihydroxydiphenylethan, 4,4'-Dihydroxydiphenoxyethan, 3,4'-Dihydroxydiphenyl, 3,5'-Dihydroxydiphenylether, 1,5-Dihydroxynaphthalin, 2,6-Dihydroxynaphthalin, 1,4-Dihydroxynaphthalin, Chlorhydrochinon, Bromhydrochinon, Methylhydrochinon, Phenylhydrochinon, Ethylhydrochinon, 2,2'-Dimethyl-4,4'-dihydroxydiphenyl, 3,3',5,5'-Tetramethyl-4,4'-dihydroxydiphenyl, 3,5'-Dimethoxy-4,4'-dihydroxydiphenylether, 1,2-(2-Chlor-4-hydroxyphenoxy)-ethan, 4-Methoxy-2,6-dihydroxynaphthalin, Resorcin, 3,4'-Dihydroxydiphenyl, 3,4'-Dihydroxydiphenylether, 3,4'-Dihydroxydiphenoxyethan, 1,3-Dihydroxynaphthalin, 1,6-Dihydroxynaphthalin, 1,7-Dihydroxynaphthalin, 2,7-Dihydroxynaphthalin, 4-Chlorresorcin, 4-Bromresorcin, 4-Methylresorcin, 4-Phenylresorcin, 4-Ethoxyresorcin, 2,5-Dichlor-1,6-dihydroxynaphthalin und 4-Methoxy-2,7-dihydroxynaphthalin.

Ganz besonders bevorzugte Diphenole b) sind Hydrochinon, Resorcin und 4,4'-Dihydroxydiphenyl.

Bevorzugte aromatische Hydroxycarbonsäuren c) sind z.B. Verbindungen der Formeln

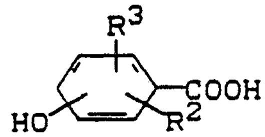

(VII)

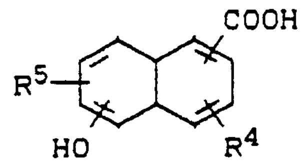

(VIII)

worin
$R^2$ bis $R^5$ $C_1$-$C_4$-Alkyl, $C_1$-$C_4$-Alkoxy, $C_6$-$C_{10}$-Aryl oder -Aryloxy, $C_7$-$C_{12}$-Aralkyl (vorzugsweise Benzyl), Halogen (vorzugsweise Chlor und Brom) oder Wasserstoff bedeuten und die Bindungen zwischen Kern und Hydroxylgruppe bzw. Carboxylgruppe einen Winkel von 45° bis 180° C bilden.

Besonders bevorzugte aromatische Hydroxycarbonsäuren c) sind z.B. 4-Hydroxy-3-methylbenzoesäure, 4-Hydroxy-3-phenylbenzoesäure, 4-Hydroxy-2-ethylbenzoesäure, 3-Chlor-4-hydroxybenzoesäure, 3-Brom-4-hydroxybenzoesäure, 4-Hydroxy-3-methoxybenzoesäure, 4-Methyl-3-hydroxybenzoesäure, 4-Hydroxy-3-phenoxybenzoesäure, 6-Hydroxy-5-chlor-2-naphthoesäure, 6-Hydroxy-5-methyl-2-naphthoesäure, 6-Hydroxy-5-methoxy-2-naphthoesäure, 6-Hydroxy-4,7-dichlor-2-naphthoesäure.

Ganz besonders bevorzugte aromatische Hydroxycarbonsäuren c) sind unsubstituierte Hydroxycarbonsäuren, wie p-Hydroxybenzoesäure und 6-Hydroxy-2-naphthoesäure.

Nicht sämtliche Kombination der aufgezählten Ausgangsmaterialien ergeben thermotrope Polyester. Der Fachmann wird seine Auswahl jeweils anhand der oben zitierten Literatur treffen oder aber aufgrund seiner Erfahrung geeignete Kombinationen auswählen.

Als Endgruppen können die thermotropen Polyester -COOH, -H, -OH, $-OC_6H_5$, Acyloxy oder von Kettenabbrechern herrührende Reste enthalten. Bevorzugte Kettenabbrecher sind monofunktionelle aromatische Hydroxylverbindungen, wie 4-Hydroxydiphenyl, p-Nonylphenol, 4-(1,1,3,3-Tetramethylbutyl)-phenol, β-Naphthol und aromatische Monocarbonsäuren, wie Diphenylcarbonsäuren und Naphthalincarbonsäuren. Endgruppen können in Mengen von 0,5 bis 5 Mol-%, bezogen auf die Summe von aromatischen Dicarbonsäureresten a) und Diphenolresten b), vorhanden sein.

Die thermotropen Polyester B können auch durch dreioder höherfunktionelle - vorzugsweise aromatische -Monomere verzweigt sein. Die Mengen verzweigender Verbindungen betragen in der Regel 0,1 bis 1 Mol-%, bezogen auf die Summe von aromatischen Dicarbonsäureresten a) und Diphenolresten b). Beispiele für bevorzugte Verzweigungsmittel sind Phloroglucin, 1,3,5-Benzoltricarbonsäure und 3,5-Dihydroxybenzoesäure.

Bevorzugte thermotrope Polymere B sind auch vollaromatische Polyestercarbonate, d.h. voll-aromatische Polyester - z.B. wie oben beschrieben - deren aromatische Dicarbonsäurereste teilweise, vorzugsweise zu 60 bis 90, Mol-%, durch Carbonylgruppen ersetzt sind.

Bevorzugte thermotrope voll-aromatische Polyestercarbonate B sind Polykondensate auf Basis von

a) (gegebenenfalls substituierter) p-Hydroxybenzoesäure,
b) Diphenol,
c) Kohlensäure, gegebenenfalls
d) aromatischer Dicarbonsäure und gegebenenfalls
e) Kettenabbrecher, wobei ein Teil der Diphenolreste (b) als 4,4'-Dihydroxybiphenylreste (f) vorliegt

und - abgesehen von den Endgruppen - für die molaren Verhältnisse der Reste folgendes gilt:

a + b = 1,
b = c + d,
f = 0,1 bis 0,9, vorzugsweise 0,11 bis 0,7, insbesondere 0,125 bis 0,4 und

$$\frac{c}{c + d} = 0{,}6 \text{ bis } 1, \text{ vorzugsweise } 0{,}6 \text{ bis } 0{,}9;$$

a = 0,4 bis 0,8, vorzugsweise 0,6 bis 0,75,
b - f = 0,02 bis 0,53, vorzugsweise 0,06 bis 0,36, insbesondere 0,1 bis 0,35,
c = 0,12 bis 0,6, vorzugsweise 0,175 bis 0,4,
d = 0 bis 0,24, vorzugsweise 0 bis 0,12 und
f = 0,02 bis 0,53, vorzugsweise 0,0275 bis 0,28, insbesondere 0,3 bis 0,16.

Die thermotropen Polyester und Polyestercarbonate B besitzen in der Regel eine inhärente Viskosität von mindestens 0,5, vorzugsweise von mindestens 1,0 dl/g (gemessen an einer Lösung von 5 mg Polykondensat/ml p-Chlorphenol bei 45° C). Sollten Polykondensate in p-Chlorphenol unlöslich sein, wird angenommen, daß sie die angegebene Mindestviskosität besitzen.

Die thermotropen Polymeren B können zwecks Verbesserung ihrer Eigenschaften einer Festphasennachkondensation unterworfen werden. Üblicherweise führt man diese für 1 bis 25 Stunden bei 200 bis 300° C und bei vermindertem Druck durch.

Fluorierte Polyolefine C

Die fluorierten Polyolefine C sind hochmolekular und besitzen Glasübergangstemperaturen von über -30 °C, in der Regel von über 100 °C, Fluorgehalte von 59 bis 76, vorzugsweise 65 bis 76, insbesondere von 70 bis 76 Gew.-% und mittlere Teilchendurchmesser $d_{50}$ von 0,05 bis 20, vorzugsweise 0,08 bis 10 µm. Bevorzugte fluorierte Polyolefine C sind Polytetrafluorethylen, Polyvinylidenfluorid, Tetrafluorethylen/Hexafluorpropylen- und Ethylen-Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Intersience, John Wiley & Sons, Inc., New York, Band 13, 1970, Seite 623-654; "Modern Plastics Encyclopedia", 1970-1971, Band 47, Nr. 10 A, Oktober 1970, Mc Graw-Hill, Inc., New York, Seite 123 und 774; "Modern Plastics Encyclopedia", 1975-1976, Oktober 1975, Band 52, Nr. 10 A, Mc Graw-Hill, Inc., New York, Seite 27, 28 und 472, und US-PS 3 671 487, 3 723 373 und 3 838 092).

Die fluorierten Polyolefine C werden vorzugsweise in nicht gesinterter Form eingesetzt.

Kautschukelastische Pfropfpolymerisate D

Kautschukelastische Pfropfpolymerisate D im Sinne der Erfindung sind Pfropfpolymerisate, die mindestens eine Glasübergangstemperatur - gemessen durch Differentialthermoanalyse - unter 10 °C, vorzugsweise unter 0 °C, insbesondere unter -20 °C aufweisen. Sie umfassen Pfropfpolymerisate, die im wesentlichen aus mindestens zwei der folgenden Monomeren erhältlich sind: Chloropren, Butadien-1,3, Isopren, Styrol, Acrylnitril, Ethylen, Propylen, Vinylacetate und (Meth-)Acrylsäureester mit 1 bis 18 C-Atomen in der Alkoholkomponente; also Pfropfpolymerisate, wie sie z.B. in "Methoden der Organischen Chemie" (Houben-Weyl), Bd. 14/1, Georg Thieme Verlag, Stuttgart 1961, S. 393-406 und in C.B. Bucknall, "Toughened Plastics", Appl. Science Publishers, London 1977, beschrieben sind. Bevorzugte Pfropfpolymerisate D sind mindestens partiell vernetzt und besitzen Gelgehalte von über 20, vorzugsweise über 40 Gew.-% insbesondere über 60 Gew.-%.

Der Gelgehalt der vernetzten Dienkautschuke wird bei 25 °C in Toluol, der Gelgehalt der vernetzten Acrylatkautschuke bei 25 °C in Dimethylformamid bestimmt (M. Hoffmann, H. Krömer, R. Kuhn, Polymeranalytik I und II, Georg Thieme Verlag, Stuttgart 1977).

Bevorzugte Pfropfpolymerisate D sind z.B. mit Styrol und/oder Acrylnitril und/oder (Meth)-Acrylsäurealkylestern gepfropfte Polybutadiene, Butandien/Styrol-Copolymerisate und Acrylatkautschuke; d.h. Copolymerisate der in der DE-OS 16 94 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 23 48 377 (= US-PS 3 919 353) beschrieben sind.

Zur Herstellung der Pfropfpolymerisate D geeignete Pfropfgrundlagen sind insbesondere Polybutadien, Butadien/Styrol-Copolymerisate mit bis zu 30 Gew.-%, bezogen auf Pfropfgrundlage, eines niederen Alkylesters von Acryl- oder Methacrylsäure (beispielsweise Methylmethacrylat, Ethylacrylat, Methylacrylat oder Ethylmethacrylat).

Besonders bevorzugte Pfropfpolymerisate D sind z.B. ABS-Polymerisate, wie sie z.B. in der DE-OS 20 35 390 (= US-PS 3 644 574) oder in der DE-OS 22 48 242 (= GB-PS 1 409 275) beschrieben sind.

Besonders bevorzugte Pfropfpolymerisate D sind solche, die durch Pfropfreaktion von

I. 10 bis 70, vorzugsweise 15 bis 50, insbesondere 20 bis 40 Gew.-%, bezogen auf Pfropfprodukt, mindestens eines (Meth)Acrylsäureesters oder 10 bis 70, vorzugsweise 15 bis 50, insbesondere 20 bis 40 Gew.-% eines Gemischs aus 10 bis 50, vorzugsweise 20 bis 35, Gew.-%, bezogen auf Gemisch, Acrylnitril oder (Meth-)Acrylsäureeester und 50 bis 90, vorzugsweise 65 bis 80, Gew.-%, bezogen auf Gemisch, Styrol auf

II. 30 bis 90, vorzugsweise 50 bis 85, insbesondere 60 bis 80 Gew.-%, bezogen auf Pfropfprodukt, eines Butadien-Polymerisats mit mindestens 50 Gew.-%, bezogen auf II, Butadienresten als Pfropfgrundlage erhältlich sind.

(Meth-)Acrylsäureester I sind Ester der Acrylsäure bzw. Methacrylsäure und einwertiger Alkohole mit 1 bis 8 C-Atomen. Besonders bevorzugt sind Methacrylsäuremethylester, -ethylester und -propylester.

Die Pfropfgrundlage II kann neben Butadienresten bis zu 50 Gew.-%, bezogen auf II, Reste anderer ethylenisch ungesättigter Monomerer, wei z.B. Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und Vinylether enthalten. Die bevorzugte Pfropfgrundlage II besteht aus reinem Polybutadien.

Da bei der Pfropfreaktion die Pfropfmonomeren I bekanntlich nicht unbedingt vollständig auf die Pfropfgrundlage II aufgepfropft werden, werden erfindungsgemäß unter Pfropfpolymerisaten D auch solche Produkte verstanden, die durch Polymerisation der Monomeren I in Gegenwart der Grundlagen II gewonnen werden.

Die erfindungsgemäßen Formmassen weisen optimale Eigenschaften auf, wenn die Menge an freiem (Co)Polymerisat 15 Gew.-%, vorzugsweise 10 Gew.-%, insbesondere 7 Gew.-%, bezogen auf Komponente D, nich übersteigt. Der Staudinger-Index dieser freien (Co)Polymerisate soll weniger als 0,6 dl/g, vorzugsweise weniger als 0,4 dl/g betragen, gemessen in Dimethylformamid bei 25° C.

Weitere geeignete Pfropfgrundlagen sind beispielsweise Polyisopren oder Alkylacrylatkautschuke auf der Basis von $C_1$-$C_8$-Alkylacrylaten, insbesondere Ethyl-, Butyl-, Ethyl-hexylacrylat. Diese als Pfropfgrundlage eingesetzten Alkylacrylatkautschuke können gegebenenfalls bis zu 30 Gew.-%, bezogen auf Pfropfgrundlage, Monomere wie vinylacetat, Acrylnitril, Styrol, Methylmethyacrylat und/oder Vinylether copolymerisiert enthalten. Diese als Pfropfgrundlage eingesetzten Alkylacrylatkautschuke können weiterhin kleinere Mengen, vorzugsweise 0,02 bis 5 Gew.-%, insbesondere 0,05 bis 2 Gew.-%, bezogen auf Pfropfgrundlage, vernetzend wirkender ethylenisch ungesättigter Monomerer enthalten. Solche Vernetzer sind z.B. Alkylendioldi(meth-)acrylate, Polyesterdi-(meth-)acrylate, Divinylbenzole, Trivinylbenzole, Triallylcyanurat, Allyl-(meth-)acrylat, Butadien oder Isopren. Acrylatkautschuke als Pfropfgrundlage können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten. Andere geeignete Pfropfgrundlagen sind z.B. EPDM-Kautschuke, also Kautschuke aus Ethylen, Propylen und einem nicht-konjugierten Dienmonomer.

Besonders bevorzugte Pfropfgrundlagen zur Herstellung der Pfropfpolymerisate D sind Dien- und Alkylacrylatkautschuke.

Besonders bevorzugte Pfropfmonomer-Zusammensetzungen enthalten

1. 50 bis 95 Gew.-% Styrol, α-Methylstyrol, 2,4-Dimethylstyrol, Methylmethacrylat oder deren Mischungen und

2. 50 bis 5 Gew.-% (Meth)Acrylnitril, Methylmethyacrylat, Maleinsäureanhydrid, N-substituiertem Maleinimid oder deren Mischungen, wobei sich die Prozentangaben auf die Summe der Komponenten 1) und 2) beziehen.

Besonders bevorzugte Pfropfpolymerisate D sind erhältlich aus
5 bis 90, vorzugsweise 30 bis 80, Gew.-Teilen Pfropfmonomer und
95 bis 10, vorzugsweise 70 bis 20, Gew.-Teilen Pfropfgrundlage.

Im allgemeinen liegen die Pfropfpolymerisate D in Form wenigstens partiell vernetzter Teilchen einer mittleren Teilchengröße von 0,1 bis 1 μm, insbesondere 0,2 bis 0,6 m vor. Die Pfropfpolymerisate D können durch radikalische Pfropfcopolymerisation der oben beschriebenen Monomeren in Gegenwart der zu pfropfenden Pfropfgrundlagen hergestellt werden. Bevorzugte Herstellungsverfahren für die Pfropfpolymerisate D sind Emulsions-, Lösungs-, Masse- oder Suspensionspolymerisation.

Da der Einsatz der erfindungsgemäß zu verwendenden Pfropfpolymerisate D vorzugsweise durch Vorabmischung ihrer Dispersionen mit Dispersionen der Komponente C erfolgt, ist die Herstellung der Komponente D nach dem Verfahren der Emulsionspolymerisation am zweckmäßigsten.

Die erfindungsgemäß einzusetzenden Pfropfpolymerisate D werden in Form wäßriger Dispersionen mit Teilchengrößen von 0,1 bis 1 μm, insbesondere 0,2 bis 0,6 μm eingesetzt. Derartige Dispersionen sind bekannt oder sind in bekannter Weise aus den vorstehend beschriebenen Pfropfpolymerisaten D herstellbar oder fallen unmittelbar bei der Herstellung der Pfropfpolymerisate an.

Nach einer bevorzugten Ausführungsform werden wäßrige Dispersionen des fluorierten Polyolefins C und des Pfropfpolymerisats D gemischt und die beiden Polymerisate gemeinsam koaguliert. Dies geschieht beispielsweise durch Sprühtrocknung, Gefriertrocknung oder Koagulation mittels Zusatz von anorganischen oder organischen Salzen, Säuren, Basen oder organischen, mit Wasser mischbaren Lösemitteln, vorzugsweise bei Temperaturen von 20-150° C, insbesondere von 50 bis 100° C. Falls erforderlich, kann die Trocknung bei 50 bis 200° C, bevorzugt zwischen 70° C und 150° C erfolgen.

Das Gewichtsverhältnis von Pfropfpolymerisat D und dem fluorierten Polyolefin C in der Dispersionsmischung kann 95:5 bis 60:40 betragen.

Für diesen Zweck bevorzugte Dispersionen von fluoriertem Polyolefin C besitzen Feststoffgehalte von 30 bis 70, insbesondere von 50 bis 60, Gew.-%. Die in den Dispersionen vorliegenden mittleren Teilchendurchmesser $d_{50}$ liegen vorzugsweise bei 0,05 bis 0,8, insbesondere 0,1 bis 0,5, μm. Die Dispersionen der Pfropfpolymerisate D besitzen in der Regel Feststoffgehalte von 25 bis 60, vorzugsweise von 30 bis 45 Gew.-%.

Als Variante der bevorzugten Ausführungsform, wonach das Pfropfpolymerisat D und das fluorierte Polyolefin C gemeinsam gefällt werden, kann man gemeinsam gefälltes Produkt mit Pfropfpolymerisat D (das frei von fluoriertem Polyolefin C ist) kombinieren. So kann man nach dieser Variante z.B.

a) 25 bis 75, vorzugsweise 40 bis 60, Gew.-Teile Pfropfpolymerisat D und fluoriertes Polyolefin C, die aus Mischung wäßriger Dispersionen beider Polymeren gemeinsamt gefällt worden sind,

b) 75 bis 25, vorzugsweise 60 bis 40, Gew.-Teile Pfropfpolymerisat D (das frei von fluoriertem Polyolefin C ist) und gegebenenfalls

c) eine hinreichende Menge an fluoriertem Polyolefin C, die so hoch ist, daß sich nach Mischen der Komponenten a+b+c mit den Komponenten A + B der anspruchsgemäße Gehalt an fluoriertem Polyolefin in der Formmasse A + B + C + D ergibt.

Natürlich kann man auch umgekehrt

a) Pfropfpolymerisat D mit einer Glasübergangstemperatur unter -30°C und fluoriertes Polyolefin C, die aus Mischung wäßriger Dispersionen beider Polymeren gemeinsam gefällt worden sind, und

b) fluoriertes Polyolefin C gemeinsam einsetzen.

Aufgrund des geringen Gehalts der erfindungsgemäßen Formmassen an fluoriertem Polyolefin C ist hier die Bandbreite der möglichen Mischungsverhältnisse entsprechend geringer.

"Teilchengröße bedeutet erfindungsgemäß immer mittlerer Teilchendurchmesser $d_{50}$, ermittelt durch Ultrazentrifugenmessungen nach W. Scholtan, H. Lange, Kolloid Z. und Z. Polymere 250 (1972) 782-796.

Die erfindungsgemäßen Formmassen könne übliche Additive, wie Gleit- und Entformungsmittel, Nukleiermittel, Stabilisatoren, Füll- und Verstärkungsstoffe, Flammschutzmittel sowie Farbstoffe und Pigmente enthalten.

Die gefüllten bzw. verstärkten Formmassen können bis zu 60, vorzugsweise 10 bis 60 Gew.-%, bezogen auf die gefüllte bzw. verstärkte Formmasse, Füll- und/oder Verstärkungsstoffe enthalten. Bevorzugte Verstärkungsstoffe sind Glasfasern. Bevorzugte Füllstoffe die auch verstärkend wirken können, sind Glaskugeln, Glimmer, Silikate, Quarz, Talkum, Titandioxid, Wollastonit.

Die mit Flammschutzmitteln ausgerüsteten Formmassen enthalten Flammschutzmittel in einer Konzentration von im allgemeinen von 3 bis 15 Gew.-%, bezogen auf die flammgeschützten Formmassen.

Das Mischen der Komponenten A bis D und gegebenenfalls weiterer Hilfsmittel bzw. der Komponenten A und B mit den Mischungen der Komponenten C und D und gegebenenfalls weiteren Hilfsmitteln kann in bekannter Weise nacheinander als auch in einem Schritt erfolgen, und zwar sowohl bei etwa 20°C (Raumtemperatur) als auch bei höherer Temperatur.

In einer bevorzugten Ausführungsform enthalten die erfindungsgemäßen Formmassen wirksame Mengen Stabilisator, um die unerwünschte Umesterung der Komponenten A und B untereinander möglichst weitgehend zu verhindern.

Um festzustellen, ob eine gegebene Stabilisatormenge die unerwünschte Umesterung wirksam unterdrückt, empfiehlt sich folgende Methode: Auf einer Knetmaschine werden die Komponenten A und B - vorzugsweise in Granulatform - zusammen mit dem Stabilisator 15 Minuten lang bei 60 U/Min. und einer Temperatur von 300°C gemischt. Der in $CH_2Cl_2$ bei 25°C lösliche Anteil der so erhaltenen Mischung wird mittels ¹H-NMR-Spektroskopie auf Umesterung untersucht; vgl. J. Defaux, P. Godard, J.P. Mercier, J. Polym. Sci., Polym. Physics Ed., 20, 1881-1894 (1982). Liegt der so bestimmte Umesterungsgrad unter 5 Mol-%, bezogen auf die im Unterschuß vorhandene Komponente, so wird die geprüfte Stabilisatormenge als "wirksam" im Sinne der Erfindung eingestuft.

Welche Verbindungen Umesterungen verhindern können, ist dem Fachmann bekannt. Sie umfassen beispielsweise Phosphorsäure, phosphorige Säure und deren Aliphatische, aromatische oder araliphatische Ester, z.B. Alkylester mit 6 bis 18 C-Atomen in der Alkoholkomponente, Phenylester, deren Phenylreste gegebenenfalls mit 1 bis 3 Substituenten mit 6 bis 18 C-Atomen substituiert sind, wie Trinonylphenyl-, Dodecylphenyl- und Triphenylphosphat; Arsenverbindungen wie Arsen(III)- und Arsen(V)-oxid; Borsäurederivate; Acetessigsäureester. Eine Übersicht über diese Art von Stabilisatoren findet sich bei H. Ludewig, Polyesterfasern, 2. Aufl., Akademie-Verlag, Berlin 1974. Erfindungsgemäß besonders bevorzugte Stabilisatoren sind beispielsweise:

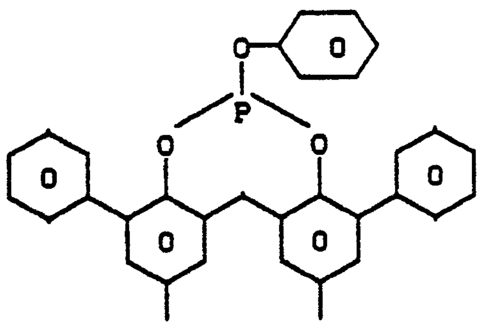

(IX)

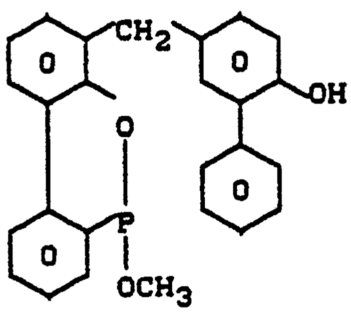

(X)

und dessen Formaldehyd-Kondensationsprodukte mit bis zu 10 wiederkehrenden Einheiten X

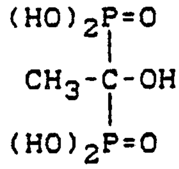

(XI)

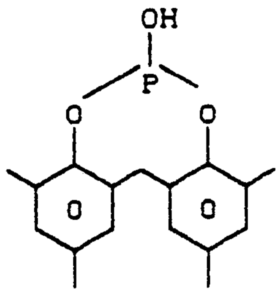

(XII)

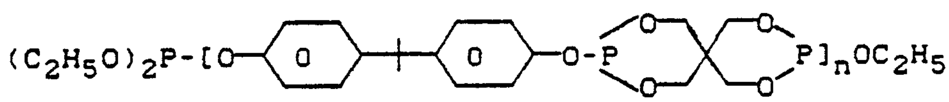

(XIII) n = 1-10

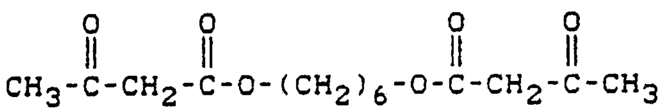

(XIV)

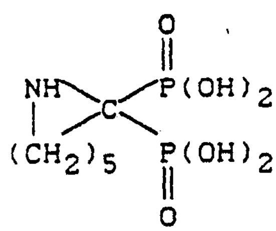

(XV)

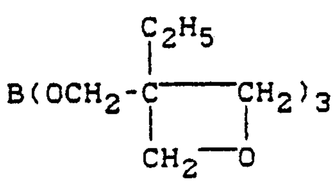

(XVI)

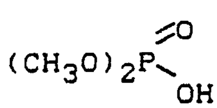

(XVII)

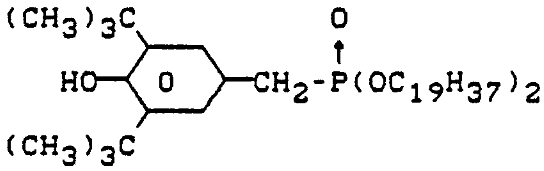

(XVIII)

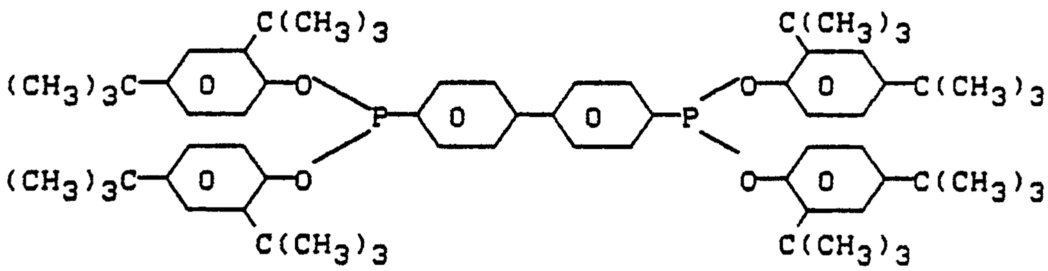

(XIX)

Die Herstellung der erfindungsgemäßen Formmassen aus den Komponenten geschieht vorzugsweise in Extrudern. Es sind jedoch auch Kneter, Walzen oder Rührgefäße zur Herstellung geeignet. Weiterer Gegenstand der Erfindung ist daher ein Verfahren zur Herstellung der erfindungsgemäßen Formmassen in der Schmelze, vorzugsweise bei Temperaturen von 280 bis 320° C.

Die erfindungsgemäßen Formmassen können aus der Schmelze zu Spritzgußformteilen, Filamenten, Fasern, Bändern und Folien verarbeitet werden, wobei in der flüssig-kristallinen Phase durch die auftretenden Scherkräfte eine Molekülorientierung erzielt wird, die in hohem Maße von der Stärke der Scherkräfte beeinflußt wird. Deswegen zeigen sie eine ausgeprägte Strukturviskosität, die bei Erhöhung der Scherkräfte stark abfällt. Geeignete Verarbeitungsverfahren sind Spritzguß, Extrusion, Pressen und Schmelzspinnen.

Aus den erfindungsgemäßen Formmassen hergestellte Formteile eignen sich besonders zur Herstellung von

- elektrotechnischen Artikeln, wie z.B. Isolatoren, gedruckten Schaltungen, Steckkontakten, Armaturenteilen,
- Teilen der Flugzeuginnenausstattung,
- Teilen medizinisch-technischer Geräte, wie z.B. Bauteilen von Klimaanlagen, Ventilteilen.

Die erfindungsgemäßen Formmassen können aber auch als Überzugs- und Beschichtungsmaterial (pulverförmig oder dispergiert) verwendet werden.

Weiterer Gegenstand der Erfindung ist also die Verwendung der neuen Formmassen zur Herstellung von Formkörpern, Filamenten, Fasern und Folien.

## Beispiele

Eingesetzte Komponenten:

A) Homopolycarbonat auf Basis von Bisphenol-A mit einer relativen Lösungsviskosität von 1,32, gemessen in $CH_2Cl_2$ bei 25° C, und einer Konzentration von 0,5 Gew.-%, hergestellt unter Verwendung von Phenol als Kettenabbrecher.

B) Vollaromatischer Polyester auf der Basis von 0,65 Mol p-Hydroxybenzoesäure, 0,3 Mol Hydrochinon, 0,3 Mol Isophthalsäure, 0,5 Mol Terephthalsäure und 0,5 Mol 4,4'-Dihydroxydiphenyl.

C) Tetrafluorethylenpolymerisat in Pulverform mit einer Teilchengröße von 500 bis 650 µm und einer Dichte von 2,18 bis 2,20 g/cm³ der Firma Hoechst (®Hostaflon TF 2026).

D) Pfropfpolymerisat von 50 Gew.-% Styrol-Acrylnitril-Gemisch (im Gewichtsverhältnis von 72:28) auf 50 Gew.-% Polybutadien mit einer mittleren Teilchengröße ($d_{50}$) von 0,3 bis 0,4 µm, erhalten durch Emulsionspolymerisation.

C D) Koagulierte Mischung aus einer Dispersion des Pfropfpolymerisats D und einer Tetrafluorethylenpolymerisat-C-Dispersion in Wasser; Gehalt an Tetrafluorethylenpolymerisat in der Mischung: 10 Gew.-%, bezogen auf Mischung PTFE-Pfropfpolymerisat. Die Tetrafluorethylenpolymerisat-Dispersion besitzt einen Feststoffgehalt von 60 Gew.-%; die Teilchengröße liegt zwischen 0.05 und 0,5 µm. Die Pfropfpolymerisat-Dispersion besitzt einen Feststoffgehalt von 34 Gew.-% und hat eine Latexteilchengröße von 0,3 bis 0,4 µm.

Herstellung von C/D

Die Dispersion des Tetrafluorethylenpolymerisats C) wird mit der Dispersion des Pfropfpolymerisat D) vermischt und mit 1,8 Gew.-%, bezogen auf Feststoff, phenolischer Antioxidantien stabilisiert. Bei 85 bis 95 °C wird die Mischung mit einer wäßrigen Lösungen von $MgSO_4$ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100 °C zu einem Pulver getrocknet. Dieses Pulver kann dann mit den weiteren Komponenten in den beschriebenen Aggregaten compoundiert werden.

Für die Herstellung der Formmassen wurden zunächst die Komponenten in Granulatform 16 Stunden bei 90 °C im Vakuum getrocknet. Die Granulate der Komponenten wurden miteinander vermischt und mit Hilfe eines Doppelwellenextruders aufgeschmolzen, innig vermischt und in einem Strang ausgetragen. Dieser wurde abgekühlt und in Granulatform zerhackt. Das Granulat der Mischung wurde unmittelbar vor der Weiterverarbeitung erneut getrocknet. Im Spritzgießverfahren wurden mit einer Schmelztemperatur von 330 °C (± 3 °C) und einer Formtemperatur von 90 °C bei 60 bar Spritzdruck Zugstäbe Nr. 3 hergestellt.

Als Vergleichsbeispiel ist das typische Ergebnis aus der Beurteilung einer unmodifizierten Polycarbonat/LC-Polyester-Mischung angegeben.

Die Neigung der Prüfkörper zur Delaminierung wurde zunächst visuell am unbelasteten Prüfkörper beurteilt. Anschließend wurden die Prüfkörper mittels einer Stanze geteilt und die von der Scherfläche ausgehend Delaminierung beurteilt. Die Beurteilung der Neigung zum Delaminieren wurde anhand folgender Skala vorgenommen:

5: spontane Delaminierung am unbelasteten Prüfkörper;

4: keine Delaminierung am unbelasteten Prüfkörper, jedoch spontane Delaminierung ausgehend von der Scherfläche;

3: keine spontane Delaminierung, jedoch von der Scherfläche her mit geringem Kraftaufwand zu spalten;

2: keine spontane Delaminierung; von der Scherfläche her nur mit hohem Kraftaufwand zu spalten;

1: homogen; auch mit sehr hohem Kraftaufwand keine Materialabspaltung.

Die Ergebnisse sind tabellarisch zusammengefaßt.

| Vergleichs-beispiel | Komp. A (Gew.-%) | Komp. B (Gew.-%) | Komp. C/D (Gew.-%) | Stabilisator Art | Stabilisator (Gew.-%) | Grad der Delaminierung |
|---|---|---|---|---|---|---|
| 1 | 89,9 | 10,0 | - | XII | 0,1 | 4 |

| Beispiel | Komp. A (Gew.-%) | Komp. B (Gew.-%) | Komp. C/D (Gew.-%) | Stabilisator Art | Stabilisator (Gew.-%) | Grad der Delaminierung |
|---|---|---|---|---|---|---|
| 2 | 89,8 | 10,0 | 0,1 | XII | 0,1 | 2 |
| 3 | 89,4 | 10,0 | 0,5 | XVI | 0,1 | 2 |
| 4 | 88,9 | 10,0 | 1,0 | XVI | 0,1 | 1 |
| 5 | 86,9 | 10,0 | 3,0 | XII | 0,1 | 2 |

## Ansprüche

1. Thermoplastische Formmassen aus
A. 1 bis 98.87 Gew.-% aromatischem Polycarbonat,
B. 1 bis 86 Gew.-% thermotropem Polymer,

C. 0,05 bis 5 Gew.-% fluoriertem Polyolefin und
D. 0,08 bis 8 Gew.-% kautschukelastischem Pfropfpolymerisat,
wobei sich die Prozentangaben jeweils auf die Summe der Komponenten A bis D beziehen.

2. Formmassen nach Anspruch 1 aus
50 bis 94,4 Gew.-% Komponente A,
5 bis 44,4 Gew.-% Komponente B,
0,1 bis 1 Gew.-% Komponente C und
0,5 bis 5 Gew.-% Komponente D.

3. Formmassen nach Ansprüchen 1 und 2, worin die Komponente A zu 80 bis 94,4 Gew.-% und Komponente B zu 5 bis 19,4 Gew.-% enthalten ist.

4. Formmassen nach Ansprüchen 1 bis 3, erhältlich durch Verwendung eines Produkts C + D, das durch Mischen wäßriger Dispersionen der Komponenten C + D, durch gemeinsame Fällung dieser Komponenten und gegebenenfalls übliche Aufarbeitung erhalten worden ist.

5. Verfahren zur Herstellung der Formmassen nach Ansprüchen 1 bis 4 durch Mischen der Komponenten in der Schmelze.

6. Verwendung der Formmassen nach Ansprüchen 1 bis 4 zur Herstellung von Formkörpern, Filamenten, Fasern und Folien.